# DEMANDE DE BREVET EUROPEEN

(11) **EP 2 472 821 A1**
(43) Date de publication de la demande: **04.07.2012**
(21) Numéro de dépôt: 11194895.6
(22) Date de dépôt: 21.12.2011
(51) Int. Cl.: H04L 29/06

(54) **Procédé de contrôle à distance d'un équipement réseau et système associé**

(30) Priorité: 28.12.2010 FR 1061323
(71) Demandeur: Société Française du Radiotéléphone-SFR, 75008 Paris (FR)
(72) Inventeur: Guindolet, Stéphane, 75012 PARIS (FR); Berlioz, Fabien, 94210 LA VARENNE SAINT HILAIRE (FR); Guyard, David, 92100 BOULOGNE BILLANCOURT (FR)
(74) Mandataire: Marconnet, Sébastien

(57) **Abrégé**

L'invention concerne essentiellement un procédé de contrôle à distance d'un équipement (13) appartenant à un réseau local privé (10), caractérisé en ce qu'il comporte les étapes suivantes :
- établir une liaison sécurisée (L) entre un client VPN associé à un équipement (13) et un serveur (19) VPN auquel est associé un serveur (20) de configuration, et
- contrôler à distance l'équipement (13) via le serveur (20) de configuration à travers la liaison sécurisée (L) ainsi établie.

## Description

**DOMAINE TECHNIQUE DE L'INVENTION**

L'invention concerne un procédé de contrôle à distance d'un équipement réseau. L'invention trouve une application particulièrement avantageuse dans le domaine des télécommunications pour la configuration et/ou la commande à distance d'équipements de type appareils de domotique, disque dur réseau, caméra IP ou dispositifs de télécommunications installés chez l'abonné d'un réseau d'un opérateur.

**ETAT DE LA TECHNIQUE**

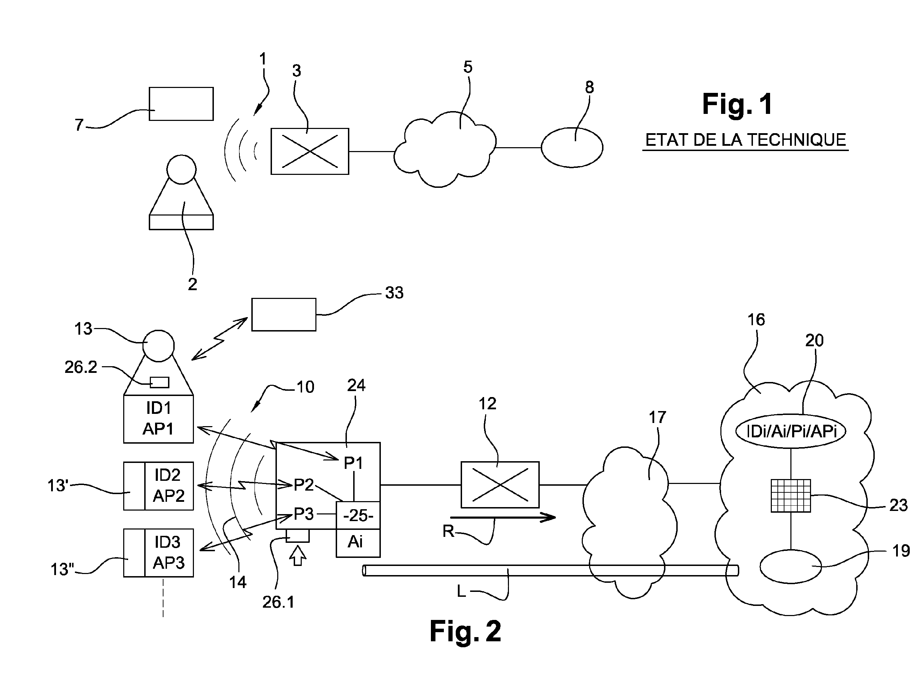

Comme montré sur la Figure 1, un réseau 1 local privé est formé par au moins un équipement référencé 2 et un routeur 3 en relation avec un réseau 5 IP de type Internet. La liaison entre l'équipement 2 et le routeur 3 est par exemple une liaison radio de type Wi-Fi.

De manière connue, ce type d'équipement 2 est configurable de manière locale en le branchant directement à un ordinateur ou en le connectant au réseau 1 et en le configurant à partir d'un ordinateur 7 connecté au réseau local.

Alternativement, une fois branché sur le réseau, l'équipement 2 peut aller télécharger sa configuration sur un serveur connecté à Internet. Toutefois, une telle méthode ne permet malheureusement pas un contrôle en temps réel d'un équipement 2.

Le contrôle à distance par un serveur 8 en relation avec le routeur 3 par l'intermédiaire du réseau 5 est plus difficile à mettre en oeuvre. En effet, dans ce type d'architecture, une requête dans le sens montant (de l'équipement 2 vers le serveur 8) est relativement facile à traiter dans la mesure où le routeur 3 pourra réaliser, via un mécanisme de translation d'adresses (NAT - Network Adress Translation), une correspondance entre l'adresse privée de l'équipement 2 sur le réseau local 1 et l'adresse publique attribuée par le FAI (Fournisseur d'Accès Internet).

En revanche, dans le sens descendant (du serveur 8 vers l'équipement 2), une requête est plus difficile à traiter dans la mesure où l'adresse privée de l'équipement 2 n'est pas accessible depuis l'extérieur du réseau local.

De manière connue, pour résoudre ce problème, il est possible de configurer le routeur 3 pour indiquer le port logique associé à l'adresse publique qui sera redirigé vers l'adresse privée de l'équipement 2 à configurer. Toutefois, une telle manipulation est non seulement complexe pour l'utilisateur mais présente de plus un problème de sécurité puisque le port ouvert pour l'équipement 2 serait susceptible d'autoriser l'accès à l'ensemble des fonctions de configuration de l'équipement 2 suite à la connaissance des informations d'identification. En outre, une telle faille de sécurité peut être exploitée par des programmes malveillants.

Il existe donc le besoin d'un procédé simple et sécurisé permettant de configurer et/ou contrôler en temps réel un équipement de manière transparente pour l'utilisateur.

L'invention permet de répondre avantageusement et efficacement à ce besoin.

**OBJET DE L'INVENTION**

A cet effet, dans l'invention, un client VPN (« Virtual Private Network » en anglais) intégré ou non à l'équipement à configurer établit un tunnel sécurisé vers un serveur VPN permettant un accès bidirectionnel entre l'équipement et le serveur de configuration. Par accès « bidirectionnel », on entend aussi bien un accès du serveur de configuration vers l'équipement qu'un accès de l'équipement vers le serveur de configuration.

Le serveur de configuration pourra alors accéder à l'équipement dès le démarrage et la connexion de ce dernier au réseau Internet. L'échange de données entre le serveur de configuration et l'équipement est alors effectué de manière sécurisée au sein du tunnel VPN.

L'invention permet ainsi notamment de :
- résoudre les problématiques complexes de NAT et d'ouverture de ports entrants,
- crypter les communications entre le client et le serveur de configuration, et
- sécuriser l'accès au serveur de configuration.

Dans le cas où le serveur de configuration répertorie les identités des différents équipements, l'invention va permettre également une lutte efficace contre la fraude dans la mesure où le fonctionnement d'un appareil volé et identifié comme tel par le serveur pourra être inhibé.

En outre, la mise en oeuvre d'un contrôle distant permet de résoudre des problématiques de paiement mensuel d'un service à valeur ajoutée dans la mesure où les services associés et l'accès à un équipement pourront être restreints automatiquement. A cet effet les serveurs de traitement des paiements sont interconnectés avec le serveur de contrôle et passent des ordres de suspension de service.

Il sera également possible d'offrir des services à valeur ajoutée basés sur un équipement identifié, tandis que le traitement du service client pourra être automatisé en cas d'incidents.

L'invention permet également d'améliorer très significativement les problématiques de traitement de service client en donnant au service client un accès aux interfaces de diagnostics et de dépannage qui communiquent avec l'équipement concerné.

L'invention concerne donc un procédé de contrôle à distance d'un équipement appartenant à un réseau local privé, caractérisé en ce que cet équipement étant en relation avec un routeur relié à un serveur de configuration par l'intermédiaire d'un réseau IP de type Internet, il comporte les étapes suivantes :
- établir une liaison sécurisée entre l'équipement auquel est associé un client VPN et un serveur VPN associé au serveur de configuration assurant un accès bidirectionnel entre l'équipement et le serveur de configuration, et
- contrôler à distance l'équipement via le serveur de configuration à travers la liaison sécurisée ainsi établie.

Selon une mise en oeuvre, la liaison sécurisée est de type SSL (Secured Socket Layer).

Selon une mise en oeuvre, la liaison est établie sur le port HTTP ou HTTPS ou via un proxy.

Selon une mise en oeuvre, l'équipement étant identifié par un identifiant unique, il comporte en outre l'étape d'enregistrer sur le serveur de configuration l'identifiant de l'équipement et l'adresse IP du client VPN.

Selon une mise en oeuvre, il comporte en outre l'étape d'enregistrer l'adresse privée de l'équipement sur le réseau local, de sorte que lorsqu'un terminal appartenant au réseau local fait une requête au serveur de configuration pour accéder à certains contenus de l'équipement, le serveur de configuration fournit audit terminal l'adresse privée de l'équipement pour permettre cet accès.

Selon une mise en oeuvre, le client VPN est intégré à l'équipement à contrôler.

Selon une mise en oeuvre, le client VPN est installé dans un élément réseau, tel qu'une passerelle, relié au routeur, cet élément réseau étant apte à établir une connexion radio avec l'équipement à commander.

Selon une mise en oeuvre, l'élément réseau étant en relation avec plusieurs équipements, le procédé comporte les étapes suivantes :
- un équipement donné fait une requête d'ouverture d'au moins un port de connexion sur l'adresse IP du client VPN installé sur l'élément réseau,
- l'équipement recommençant l'étape précédente jusqu'à ce que ledit équipement trouve au moins un port de connexion disponible auquel il est alors associé.

Selon une mise en oeuvre, l'élément réseau enregistre auprès du serveur de configuration tous les identifiants des équipements avec lequel ledit élément réseau est en relation, l'adresse IP du client VPN de l'élément réseau et le port de connexion ouvert sur l'adresse IP du client VPN auquel l'équipement est associé.

Selon une mise en oeuvre, le procédé comporte l'étape de configurer de manière automatique la connexion radio entre l'élément réseau et l'équipement.

Selon une mise en oeuvre, l'étape de configuration automatique est effectuée à travers un protocole de type WPS (Wi-Fi Protected Setup).

Selon une mise en oeuvre, un deuxième équipement appartenant à un deuxième réseau local privé étant associé à un deuxième client VPN, il comporte l'étape d'établir une deuxième liaison sécurisée entre le deuxième client VPN et le serveur VPN, les deux équipements échangeant des données via les liaisons sécurisées établies entre les clients VPN et le serveur VPN.

Selon une mise en oeuvre, l'élément réseau comportant un module de connexion radio avec un réseau de téléphonie mobile, il comporte l'étape d'établir la liaison sécurisée via ledit réseau de téléphonie mobile.

L'invention concerne en outre un système de commande à distance d'un équipement réseau appartenant à un réseau privé local, caractérisé en ce qu'il comporte :
- un élément réseau, tel qu'une passerelle, adapté à être relié à un routeur en relation avec un réseau IP et à établir une relation radio avec l'équipement, cet élément réseau intégrant un client VPN,
- un serveur VPN associé à un serveur de configuration apte à établir une liaison sécurisée entre le client VPN et le serveur VPN de sorte que le serveur de configuration peut contrôler à distance l'équipement à travers la liaison sécurisée.

La mise en relation au niveau du serveur VPN des clients VPN permet de créer un réseau virtuel dans lequel l'administrateur du serveur peut donner ou non l'autorisation aux différents clients de communiquer entre eux via le serveur. Ceci permet l'échange de données sécurisées et automatiques, le transfert d'informations entre équipements, le partage d'informations, l'optimisation des problématiques de sauvegardes, etc..

**BREVE DESCRIPTION DES FIGURES**

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 (déjà décrite) : une représentation schématique d'une architecture réseau selon l'état de la technique ;

Figure 2 : une représentation schématique d'un système selon l'invention permettant de contrôler à distance un équipement appartenant à un réseau local privé ;

Figure 3 : un diagramme des différentes étapes du procédé selon l'invention ;

Figure 4: une représentation schématique d'une variante de réalisation de l'invention dans laquelle l'application client VPN est intégrée à l'équipement à contrôler ;

Figure 5 : une représentation schématique d'une variante de réalisation de l'invention avec un réseau local de domotique.

Les éléments identiques, similaires ou analogues conservent la même référence d'une figure à l'autre.

**DESCRIPTION DE MODES DE REALISATION PREFERENTIELS DE L'INVENTION**

La Figure 2 montre un réseau 10 privé local formé par un routeur 12 et des équipements 13, 13', 13", ..., aptes à communiquer par l'intermédiaire d'une liaison radio de type Wi-Fi. Ces équipements 13, 13', 13", ..., peuvent prendre par exemple la forme d'un appareil de domotique ou d'une caméra de type IP. Ces équipements 13, 13', 13", .... sont identifiés par un identifiant unique IDi et présentent sur le réseau local une adresse privée APi. Dans une variante de l'invention, le réseau 10 privé local est un réseau filaire.

Le réseau local 10 est interconnecté avec un réseau coeur 16 d'un opérateur par l'intermédiaire d'un réseau IP 17 de type Internet. Le réseau 16 comporte dans un exemple un serveur 19 VPN apte à gérer les demandes d'établissement d'une liaison sécurisée L dite aussi « tunnel » par un client VPN 25 de l'élément réseau 24. Le réseau coeur 16 comporte également un serveur 20 de configuration assurant la gestion de la configuration et/ou la commande des équipements 13 à travers la liaison L. A cet effet, le serveur 20 de configuration répertorie les identifiants IDi des équipements 13, 13', 13", ..., ainsi que l'adresse IP du client VPN Ai et au moins un port ouvert Pi sur l'adresse IP du client VPN 25 associé à chacun de ces équipements 13, 13', 13", ... Ces deux serveurs 19 et 20 sont interconnectés de préférence par l'intermédiaire d'un pare-feu référencé 23. Dans une variante de réalisation, les deux serveurs 19 et 20 sont confondus.

Un élément réseau 24, par exemple du type passerelle ou routeur, est connecté au routeur 12 par exemple par l'intermédiaire d'une liaison Ethernet. Cet élément 24 est adapté pour établir une liaison radio 14 par exemple de type Wi-Fi avec l'équipement 13. Un client VPN 25 installé sur l'élément 24 permet l'établissement d'une liaison sécurisée L entre l'élément 24 et le serveur 19. On note qu'il est possible de brancher plusieurs équipements 13, 13', 13", ..., à un même élément réseau 24 pour établir un seul tunnel L, dans la mesure où chaque équipement 13, 13', 13", ..., peut être associé à au moins un port Pi sur l'adresse IP Ai du client VPN. Le nombre d'équipements 13, 13', 13", ..., est fonction du nombre de ports Pi disponibles. En outre, on remarque que dans une telle architecture, le ou les équipements 13, 13', 13", ..., n'ont pas à supporter la gestion de l'établissement et du maintien du tunnel L.

De préférence, dans le cas d'une déclinaison sans fil de l'invention, l'élément 24 met en oeuvre un protocole WPS (Wi-Fi Protected Setup) permettant de simplifier la phase de configuration de la sécurité des réseaux sans fil en assurant notamment une transmission de la clef WEP de manière transparente pour l'utilisateur. A cet effet, des boutons 26.1, 26.2 (physiques ou virtuels) activables par l'utilisateur sont prévus à la fois sur le point d'accès au réseau (l'élément réseau 24) et sur l'équipement 13.

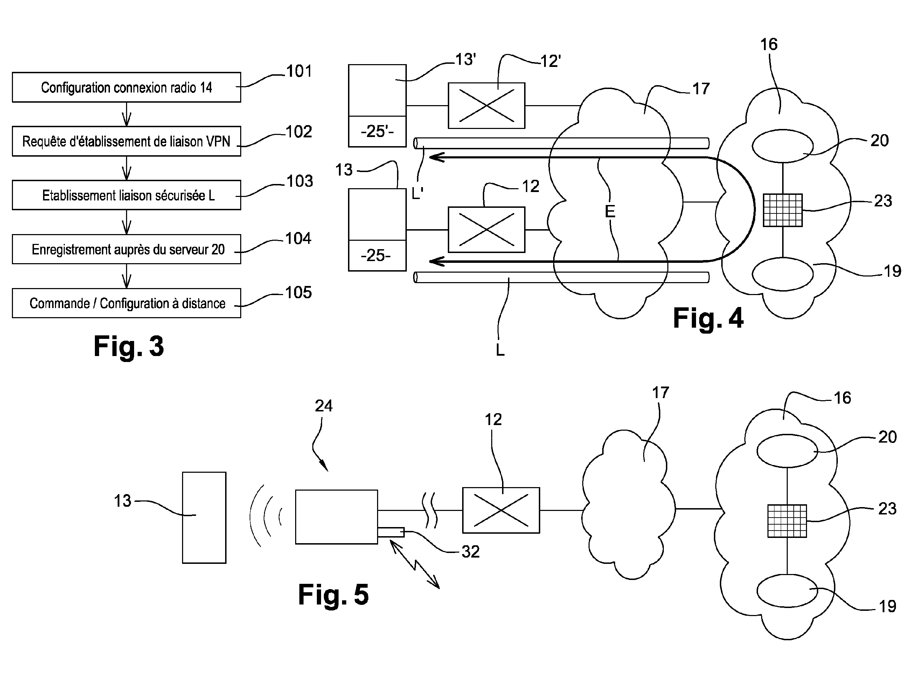

Lors d'une première étape 101 de mise en oeuvre du procédé selon l'invention montré sur la Figure 3, une fois que l'utilisateur aura mis sous tension l'équipement 13, il lui suffira d'activer les boutons 26.1, 26.2 pour configurer la connexion radio 14 de l'équipement 13 sur le réseau 10.

Dans une deuxième étape 102, dès qu'un équipement 13, 13', 13", ..., établit une connexion IP avec le réseau 17 à travers l'élément réseau 24, l'élément réseau 24 émet alors une requête R vers le serveur VPN 19 de demande d'établissement de liaison sécurisée L avec ledit serveur VPN 19. A cet effet, un équipement 13, 13', 13", ..., fait une requête d'ouverture d'un port Pi sur l'adresse IP Ai du client VPN installé sur l'élément réseau 24. L'équipement 13 recommence jusqu'à ce qu'il trouve au moins un port Pi disponible auquel il est alors associé. En effet, il se peut qu'un équipement 13, 13', 13", ..., nécessite l'utilisation de plus d'un port Pi de connexion, une caméra IP par exemple utilisant deux ports.

Dans une troisième étape 103, le serveur VPN 19 établit la liaison sécurisée L avec l'équipement 13, de sorte que l'échange de données entre le serveur 20 de configuration et l'équipement 13 pourra être effectué de manière sécurisée. De préférence, la liaison L ainsi établie est de type SSL (Secured Socket Layer). On note par ailleurs que la liaison L est établie sur le port HTTP ou HTTPS ou via un proxy. L'intérêt d'un tel tunnel est qu'il est très difficilement bridable et compatible avec l'ensemble des accès Internet.

Dans une quatrième étape 104, l'élément réseau 24 enregistre les équipements 13, 13', 13", ..., auprès du serveur 20 de configuration. A cet effet, l'élément réseau 24 enregistre auprès du serveur 20 de configuration tous les identifiants IDi des équipements 13, 13', 13", ..., avec lesquels l'élément réseau 24 est en relation, l'adresse IP Ai du client VPN de l'élément réseau 24, et le ou les ports Pi de connexion ouvert(s) sur l'adresse IP du client VPN au(x)quel(s) chaque élément 13, 13', 13", ..., est associé. Les paramètres relatifs à l'adresse Ai du client VPN et au(x) port(s) Pi associé(s) aux différents équipements 13, 13', 13", ..., sont utilisés pour permettre l'accès depuis le réseau coeur à l'équipement cible 13, 13', 13", ..., c'est-à-dire celui à contrôler, via la liaison sécurisée L.

Dans une cinquième étape 105, le serveur 20 de configuration peut alors commander et/ou configurer à distance l'équipement 13 par exemple via la liaison sécurisée L de manière complètement transparente pour l'utilisateur. On note que par « configurer », on entend modifier les paramètres de l'équipement 13 pour permettre la mise en fonctionnement de l'équipement ; tandis qu'on entend par « commander » le fait de pouvoir contrôler le fonctionnement de l'équipement 13 alors qu'il a déjà été configuré. Par « contrôler », on entend le fait de pouvoir configurer et/ou commander un équipement à distance.

Il est également possible pour le serveur 20 de proposer des services en fonction du type de l'équipement 13 ainsi répertorié. L'équipement 13 étant identifié dans le serveur 20, il est possible d'inhiber son fonctionnement en cas de vol par exemple.

Dans un perfectionnement, l'élément réseau 24 enregistre en outre sur le serveur 20 de configuration l'adresse privé APi de l'équipement 13 sur le réseau local 10. De cette manière, lorsqu'un terminal référencé 33, tel qu'un ordinateur ou un PDA, appartenant au réseau local 10 fait une requête au serveur 20 de configuration pour accéder à certains contenus de l'équipement 13, le serveur 20 de configuration fournit au terminal 33 l'adresse privée AP1 de l'équipement 13 pour permettre cet accès. Cela permet d'avantageusement optimiser le transfert des données au sein du réseau local 10 entre un équipement 13 et un terminal 33 d'accès aux services lié à l'équipement 13.

La Figure 4 montre un autre mode de réalisation de l'invention dans lequel le client VPN 25 est intégré à l'équipement 13 prenant par exemple la forme d'un disque dur réseau référencé.

Plus précisément, dans cette réalisation, le disque dur 13 est relié au routeur 12 par l'intermédiaire d'une liaison de type Ethernet. Le routeur 12 est connecté au réseau coeur 16 comportant les serveurs VPN 19 et le serveur 20 de configuration par l'intermédiaire du réseau Internet 17.

Une fois le disque dur 13 alimenté en puissance, ce dernier pourra alors se connecter sur le réseau IP, le client VPN 25 établissant alors une liaison sécurisée L avec le serveur VPN 19.

Un deuxième disque dur réseau 13' appartient à un deuxième réseau local 10' comportant un routeur 12' en relation avec le réseau IP 17. Ce disque 13' intègre un deuxième client VPN 25' permettant d'établir une deuxième liaison L' sécurisée entre le client VPN 25' et le serveur VPN 19. L'intérêt d'une telle architecture est que les deux disques durs 13 et 13' peuvent échanger des données suivant le chemin E de manière sécurisée à travers les liaisons L et L' et en passant par le serveur VPN 19.

La mise en relation au niveau du serveur VPN des clients VPN permet ainsi de créer un réseau virtuel dans lequel l'administrateur du serveur 20 peut donner ou non l'autorisation aux différents clients de communiquer entre eux via le serveur 20. Ceci permet l'échange de données sécurisées et automatiques, le transfert d'informations entre équipements 13, 13' le partage d'informations, l'optimisation des problématiques de sauvegardes, etc..

La Figure 5 montre une variante de réalisation de l'invention dans laquelle l'élément réseau 24 prend la forme d'une passerelle réseau connectée au routeur 12 apte à établir une liaison radio avec un équipement de domotique 13 suivant un protocole de type Bluetooth, ZigBee ou tout autre protocole de communication adapté.

Selon un autre mode de réalisation avantageux, la passerelle 24 comporte un module 32 de connexion radio avec un réseau de téléphonie mobile, par exemple une clef 3G, de sorte qu'il sera possible d'établir la liaison sécurisée L via le réseau mobile même en cas de rupture de connexion avec le routeur 12.

## Revendications

1. Procédé de contrôle à distance d'un équipement (13) appartenant à un réseau local privé (10), **caractérisé en ce que**, cet équipement (13, 13', 13") étant en relation avec un routeur (12) relié à un serveur (20) de configuration par l'intermédiaire d'un réseau IP de type Internet, il comporte les étapes suivantes :
- établir une liaison sécurisée entre l'équipement (13, 13', 13") auquel est associé un client VPN (25) et un serveur VPN (19) associé au serveur (20) de configuration assurant un accès bidirectionnel entre l'équipement (13) et le serveur (20) de configuration,
- contrôler à distance l'équipement (13) via le serveur (20) de configuration à travers la liaison sécurisée (L) ainsi établie, et
- enregistrer l'adresse privée (APi) de l'équipement (13) sur le réseau local (10), de sorte que lorsqu'un terminal (33) appartenant au réseau local (10) fait une requête au serveur (20) de configuration pour accéder à certains contenus de l'équipement (13), le serveur (20) de configuration fournit audit terminal (33) l'adresse privée de l'équipement (13) pour permettre cet accès.

2. Procédé selon la revendication 1, **caractérisé en ce que** la liaison (L) sécurisée est de type SSL (Secured Socket Layer).

3. Procédé selon la revendication 2, **caractérisé en ce que** la liaison est établie sur le port http, ou https, ou via un proxy.

4. Procédé selon l'une des revendications 1 à 3, **caractérisé en ce que** l'équipement (13) étant identifié par un identifiant unique (ID1), il comporte en outre l'étape d'enregistrer sur le serveur (20) de configuration l'identifiant (IDi) de l'équipement (13, 13', 13", ...) et l'adresse IP du client VPN (Ai).

5. Procédé selon l'une des revendications 1 à 4, **caractérisé en ce que** le client VPN (25) est intégré à l'équipement (13') à contrôler.

6. Procédé selon l'une des revendications 1 à 5, **caractérisé en ce que** le client VPN (25) est installé dans un élément réseau (24), tel qu'une passerelle, relié au routeur (12), cet élément réseau (24) étant apte à établir une connexion radio (14) avec l'équipement (13) à commander.

7. Procédé selon la revendication 6, **caractérisé en ce que** l'élément réseau étant en relation avec plusieurs équipements (13, 13', 13", ...) il comporte les étapes suivantes :
- un équipement donné (13, 13', 13", ...) fait une requête d'ouverture d'au moins un port de connexion (Pi) sur l'adresse IP du client VPN installé sur l'élément réseau (24),
- l'équipement (13, 13', 13", ...) recommençant l'étape précédente jusqu'à ce que ledit équipement (13, 13', 13", ...) trouve au moins un port de connexion (Pi) disponible auquel il est alors associé.

8. Procédé selon la revendication 7, **caractérisé en ce que** l'élément réseau (24) enregistre auprès du serveur (20) de configuration tous les identifiants (IDi) des équipements (13, 13', 13", ...) avec lequel ledit élément réseau (24) est en relation, l'adresse IP du client VPN de l'élément réseau (24) et le port (Pi) de connexion ouvert sur l'adresse IP du client VPN auquel l'équipement (13, 13', 13", ...) est associé.

9. Procédé selon l'une des revendications 6 à 8, **caractérisé en ce qu'**il comporte l'étape de configurer de manière automatique la connexion radio (14) entre l'élément réseau (24) et l'équipement (13).

10. Procédé selon la revendication 9, **caractérisé en ce que** l'étape de configuration automatique est effectuée à travers un protocole de type WPS (Wi-Fi Protected Setup).

11. Procédé selon l'une des revendications 1 à 10, **caractérisé en ce que** un deuxième équipement (13') appartenant à un deuxième réseau local privé (10') étant associé à un deuxième client VPN (25'), il comporte l'étape d'établir une deuxième liaison (L') sécurisée entre le deuxième client VPN (25') et le serveur VPN (19), les deux équipements (13, 13') échangeant des données via les liaisons sécurisées (L, L') établies entre les clients VPN (25, 25') et le serveur VPN (19).

12. Procédé selon l'une des revendications 1 à 11, **caractérisé en ce que** l'élément réseau (24) comportant un module (32) de connexion radio avec un réseau de téléphonie mobile, il comporte l'étape d'établir la liaison sécurisée (L) via ledit réseau de téléphonie mobile.

13. Système de commande à distance d'un équipement (13) réseau appartenant à un réseau (10) privé local, **caractérisé en ce qu'**il comporte :
- un élément réseau (24), tel qu'une passerelle, adapté à être relié à un routeur (12) en relation avec un réseau IP et à établir une relation radio avec l'équipement (13), cet élément réseau (24) intégrant un client VPN (25),
- un serveur VPN (19) associé à un serveur (20) de configuration apte à établir une liaison sécurisée (L) entre le client VPN (25) et le serveur (19) VPN de sorte que le serveur (20) de configuration peut contrôler à distance l'équipement (13) à travers la liaison sécurisée (L),
- l'élément réseau (24) enregistrant l'adresse privée (APi) de l'équipement (13) sur le réseau local (10), de sorte que lorsqu'un terminal (33) appartenant au réseau local (10) fait une requête au serveur (20) de configuration pour accéder à certains contenus de l'équipement (13), le serveur (20) de configuration fournit audit terminal (33) l'adresse privée de l'équipement (13) pour permettre cet accès.
